# EUROPEAN PATENT SPECIFICATION

(11) **EP 2 476 999 B1**
(45) Date of publication and mention of the grant of the patent: **15.06.2016**
(21) Application number: 10815366.9
(22) Date of filing: 08.09.2010
(51) Int. Cl.: G01B 11/24, G06T 7/20, G01C 11/06

(54) **METHOD FOR MEASURING DISPLACEMENT, DEVICE FOR MEASURING DISPLACEMENT, AND PROGRAM FOR MEASURING DISPLACEMENT**
VERLAGERUNGSMESSVERFAHREN, VERLAGERUNGSMESSVORRICHTUNG UND VERLAGERUNGSMESSPROGRAMM
PROCÉDÉ DE MESURE DU DÉPLACEMENT, DISPOSITIF DE MESURE DU DÉPLACEMENT ET PROGRAMME POUR LA MESURE DU DÉPLACEMENT

(30) Priority: 08.09.2009 JP 2009207026
(43) Date of publication of application: 18.07.2012
(73) Proprietor: PASCO Corporation, Tokyo 153-0043 (JP); Incorporated Administrative Agency Public Works Research Institute, Ibaraki 305-8516 (JP)
(72) Inventor: SHIMAMURA, Hideki, Tokyo 153-0043 (JP); SHIMOMURA, Hiroyuki, Tokyo 153-0043 (JP); TACHIBANA, Kikuo, Tokyo 153-0043 (JP); ZHU, Lin, Tokyo 153-0043 (JP); FUJISAWA, Kazunori, Tokyo 194-8508 (JP)
(74) Representative: Winter, Brandl, Fürniss, Hübner, Röss, Kaiser, Polte - Partnerschaft mbB
(86) International application number: PCT/JP2010/065370
(87) International publication number: WO 2011/030771

(56) References cited:
- JP-A- 2001 195 578
- JP-A- 2003 130 642
- JP-A- 2006 284 224
- JP-A- 2007 034 808
- JP-A- 2007 127 478
- JP-A- 2007 323 616
- JP-A- 2008 015 815
- US-A1- 2007 025 595
- G. TOULMINET ET AL: "Vehicle detection by means of stereo vision-based obstacles features extraction and monocular pattern analysis", IEEE TRANSACTIONS ON IMAGE PROCESSING, vol. 15, no. 8, 1 August 2006 (2006-08-01) , pages 2364-2375, XP055076056, ISSN: 1057-7149, DOI: 10.1109/TIP.2006.875174
- BERTOZZI M ET AL: "GOLD: A PARALLEL REAL-TIME STEREO VISION SYSTEM FOR GENERIC OBSTACLE AND LANE DETECTION", IEEE TRANSACTIONS ON IMAGE PROCESSING, IEEE SERVICE CENTER, PISCATAWAY, NJ, US, vol. 7, no. 1, 1 January 1998 (1998-01-01) , pages 62-80, XP000727376, ISSN: 1057-7149, DOI: 10.1109/83.650851
- Gwenaëlle Toulminet ET AL: "Fast and accurate stereo vision-based estimation of 3D position and axial motion of road obstacles.", International Journal of Image and Graphics 4.01, 1 January 2004 (2004-01-01), pages 99-125, XP055076146, Retrieved from the Internet: URL:http://asi.insa-rouen.fr/enseignants/~ gtoulminet/reference/IJIG2003.pdf [retrieved on 2013-08-22]
- HARVILLE M ET AL: "Fast, integrated person tracking and activity recognition with plan-view templates from a single stereo camera", PROCEEDINGS OF THE 2004 IEEE COMPUTER SOCIETY CONFERENCE ON COMPUTER VISION AND PATTERN RECOGNITION 27 JUNE-2 JULY 2004 WASHINGTON, DC, USA, IEEE, PROCEEDINGS OF THE 2004 IEEE COMPUTER SOCIETY CONFERENCE ON COMPUTER VISION AND PATTERN RECOGNITION IEE, vol. 2, 27 June 2004 (2004-06-27), pages 398-405, XP010708670, DOI: 10.1109/CVPR.2004.1315191 ISBN: 978-0-7695-2158-9
- DEMIRDJIAN D ET AL: "Activity maps fo location-aware computing", APPLICATIONS OF COMPUTER VISION, 2002. (WACV 2002). PROCEEDINGS. SIXTH IEEE WORKSHOP ON 3-4 DEC. 2002, PISCATAWAY, NJ, USA,IEEE, 3 December 2002 (2002-12-03), pages 70-76, XP010628727, DOI: 10.1109/ACV.2002.1182159 ISBN: 978-0-7695-1858-9

## Description

### TECHNICAL FIELD

The present invention relates to a method for displacement measurement, a device for displacement measurement, and a program for displacement measurement for displacement measurement of an object, using stereo pair images.

### BACKGROUND ART

Displacement measurement technique is important in, e.g., analysis on and measures against landslide, earth works, and construction and management of earth structure and so forth. For example, as to landslide, displacement measurement is used to understand a series of kinetic behaviors from occurrence to completion of a landslide and its mechanism. When understanding on landslide phenomena can be deepened based on such a use of displacement measurement, it will become possible to estimate a shape of a slide surface, to develop more sophisticated numerical calculation methods, and to study effective prevention measures against landslide.

Various methods have been proposed for displacement measurement technique. As to landslide phenomena in particular, a method has been known in which a reflection panel is disposed in advance on an object to be measured, and the distance is measured by irradiating light and observing reflected light. In addition, a method using a photogrammetry technique has been also known. A method using a photogrammetry technique does not require disposition of a reflection panel or the like, and thus is preferably used in landslide observation covering a wider region and in a place hardly accessible. Conventionally, in landslide analysis using a photogrammetry technique, deformation in the landform due to landslide is observed, using aerial photos and ground photos before and after the landslide, and landform data.

According to a conventional basic method for analysis on deformation in a landform, a person detects a displacement tracking point by viewing an image, and determines correspondence between displacement characteristic points in the respective images through manual operation to obtain a displacement vector. Prior Art Document: Japanese Patent Laid-open Publication No. 2000-251059

The paper "Vehicle detection by means of stereo vision-based obstacles features extraction and monocular patent analysis" by G. Toulminet et al, IEEE Transactions on Image Processing, vol. 15, no. 8, pages 2364-2375, a stereo vision system for the detection and distance computation of a preceding vehicle is presented. There are performed two major steps. Initially, a stereo vision-based algorithm is used to extract relevant three-dimensional features which are then used as a starting point for preceding vehicle detection. By using a symmetry operator, a match against a simplified model of a rear vehicle's shape is performed using a monocular vision-based approach that allows the identification of a preceding vehicle. In addition, using the three-dimensional information previously extracted, a distance computation is performed.

In the paper "Gold: A parallel real-time stereo vision system for generic obstacle and lane detection" by Bertozzi et al, IEEE Transactions on Image Processing, vol. 7, no. 1, pages 62-80, there is described a stereo vision-based hardware and software architecture to be used on moving vehicles. Based on a full-custom massively parallel hardware, both generic obstacles and the lane position in a structured environment (with painted lane markings) are detected. By using a geometrical transformation the prospective effect is removed from both left and right stereo images; the left is used to detect lane markings with a series of morphological filters, while both remapped stereo images are used for the detection of free-space in front of the vehicle.

Document US 2007/0025595 A1 describes a change discrimination device for discriminating an alteration of a photographing target only from an aerial photograph or irrespectively of a difference in lighting conditions or photographing conditions at the time of taking a photo, and at minute distance intervals on a pixel basis, which receives the input of a plurality of serial image data at a new time point and an old time point, generates three-dimensional data (DSM) by subjecting the applied aerial image data to stereo-matching processing, generates ortho-image data and ortho-DSM data by normalizing the aerial image data and the generated DSM data, compares colors by using the generated ortho-image of the new time point and the ortho-image of the old time point and compares heights by using the generated ortho-DSM data of the new time point and ortho-DSM data of the old time point to discriminate an alteration of a feature on the earth.

Moreover, it is referred to the paper by Harville et al: "Fast, Integrated Person Tracking and Activity Recognition with Plan-View Templates from a Single Stereo Camera", Proceedings of the 2004 IEEE Computer Society Conference on Computer Vision and Pattern Recognition, vol. 2, 27 June 2004, pages 398-405, which describes a method according to the preamble of claim 1.

Additionally, it is referred to the paper by Demirdjian et al: "Activity Maps for Location-aware Computing", Applications of Computer Vision, 2002, Proceedings of the Sixth IEEE Workshop on 3.4 December 2002, pages 70-76.

### DISCLOSURE OF THE INVENTION

### Problems to be Solved by the Invention

Recent development of digital camera technology and photogrammetry and image analysis technique contributes to achievement of detailed observation and precise analysis on a high speed moving body, based on an image captured from a remote place. However, a technique that effectively incorporates the technology development to perform efficient analysis on displacement, such as a landslide or the like, using successively captured images has not yet been developed. In an analysis on a case, such as landslide, in which the number of displacement characteristic points could be enormous, it is not practicable to perform successive image capturing at a very long period according to a conventional method which largely relies on a manual operation, and it is not easy to accurately and efficiently track displacement and to obtain a displacement vector according to a conventional method.

The present invention has been conceived in order to solve the above described problems, and aims to provide a method for displacement measurement, a device for displacement measurement, and a program for displacement measurement for efficiently detecting and highly accurately measuring 3D displacement of a target portion of an object, based on successively captured images of an object.

The invention is defined by the features of the independent claims. The dependent claim is directed to a preferred embodiment of the invention.

### EFFECT OF THE INVENTION

According to the present invention, 3D displacement of a target portion of an object can be efficiently detected and highly accurately measured, based on successively captured images of the object.

### BRIEF DESCRIPTION OF THE DRAWINGS

FIG. 1 is a schematic block diagram of a displacement measurement system according to an embodiment of the present invention;
FIG. 2 is a schematic flowchart of processing by a processing unit according to an embodiment;
FIG. 3 is a schematic diagram explaining image tracking processing;
FIG. 4 is a schematic diagram showing 2D displacement vector obtained in the processing shown in FIG. 3;
FIG. 5 is a schematic diagram of 3D mesh data; and
FIG. 6 is a schematic diagram explaining conversion processing from 2D displacement to 3D displacement, using 3D mesh data;
FIG. 7 is a schematic flowchart of processing by a processing unit according to a comparative example.

### MODE FOR CARRYING OUT THE INVENTION

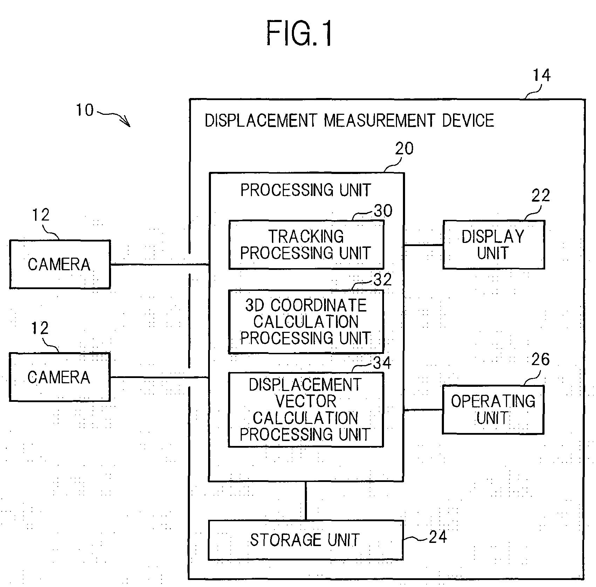

In the following, a displacement measurement system 10 according to an embodiment of the present invention (hereinafter referred to as an embodiment) will be described based on accompanying drawings. FIG. 1 is a schematic block diagram of the displacement measurement system 10. The structure shown in FIG. 1 is common to the embodiment and the comparative example to be described below. The displacement measurement system 10 includes a plurality of cameras 12 and a displacement measurement device 14.

The plurality of cameras 12 include at least two cameras, and placed so as to be able to capture a stereo image of an object for displacement measurement. In this embodiment, e.g., landslide will be described as an object for measurement, and the camera 12 is installed in a place from which an observational target point for landslide, such as a slope surface, a cliff, or the like, can be observed and the entire observation area can be covered in image capturing, and which is considered safe. For example, the plurality of cameras 12 are placed basically in the lateral direction with a distance ensured therebetween, and capture images of an observational target point from different point of views to thereby provide a stereo image composed of a pair of still pictures. The respective cameras 12 successively capture images in a synchronous manner, and the captured images are input to the displacement measurement device 14. Note that a frame rate for successive image capturing is determined in consideration of a landslide speed, the distance from the camera 12 to an observational target point, and so forth, to be such a high speed that allows tracking processing between successive frames. Note that a video camera is usable as a camera here. Further, although a camera 12 for outputting digital image data is suitable for the processing by the displacement measurement device 14, a camera for outputting an analog signal is also usable. In the latter case, the displacement measurement device 14 executes A/D conversion.

The displacement measurement device 14 includes a processing unit 20, a display unit 22, a storage unit 24, and an operating unit 26. The processing unit 20 includes a tracking processing unit 30, a 3D coordinate calculation processing unit 32, and a displacement vector calculation processing unit 34. For example, the displacement measurement device 14 can be implemented using a computer. The CPU of the computer constitutes the processing unit 20, and the tracking processing unit 30, the 3D coordinate calculation processing unit 32, and the displacement vector calculation processing unit 34 can be implemented by a program executed by the CPU.

Further, the storage unit 24 includes a hard disc, or the like, incorporated into a computer or the like. For example, the storage unit 24 holds data on a stereo image input from the camera 12 for a period of time necessary for stereo measuring processing and tracking processing. Still further, orientation elements related to image capturing by the camera 12 and necessary in stereo measuring processing are stored in advance in the storage unit 24. Note that the orientation elements include external orientation elements (projection central position, posture) and internal orientation elements (principal point, focal distance, image resolution, and the like), and various functions for conversion between the coordinates in the actual space where an observation area is present and image coordinates can be given using these orientation elements.

The display unit 22 is an image display device, such as a liquid crystal monitor or the like, and the operating unit 26 includes a keyboard, a mouse or the like.

The tracking processing unit 30 executes pattern matching processing, e.g., between consecutive image capturing times with respect to a tracking image that is based on at least one of the images constituting a stereo image captured by the camera 12, and as to a target portion that is set on an object at a certain time, tracks the 2D image of the target portion on the tracking image. Note that setting a target portion can be made on, e.g., a tracking image, and that two or more target portions may be set on the image. The setting is made by an operator by operating the operating unit 26 while looking at a tracking image shown on the display unit 22. Further, while a feature of a target portion in an image may be stored in advance in the storage unit 24, and the processing unit 20 may extract a part coincident with the feature at the start of tracking, or the like, and set the extracted part as a target portion. For example, a tree, a rock, a structure on the ground, or the like may be set as a target portion.

Based on the position of the 2D image of the target portion in a tracking image, the 3D coordinate calculation processing unit 32 obtains 3D coordinates of the target portion at an image capturing time related to the tracking image through stereo measuring processing executed relative to a stereo image.

Based on the 3D coordinates of the target portion at the respective times, the displacement vector calculation processing unit 34 obtains a 3D displacement vector.

In the above, a structure common to the embodiment and the comparative example has been described. The displacement measurement systems 10 according to the embodiment and the comparative example are different in the processing executed by the processing unit 20. This processing according to the embodiment and the comparative example will be described below.

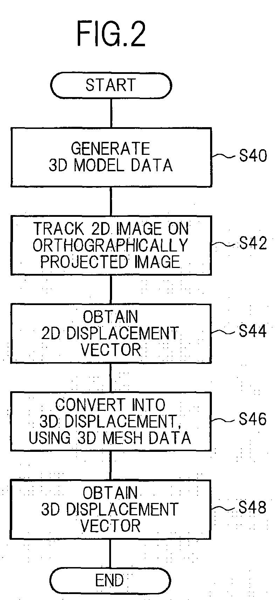

FIG. 2 is a schematic flowchart of the processing executed by the processing unit 20 in the first embodiment. Specifically, the processing unit 20 generates 3D model data based on a stereo image captured by the camera 12 (S40). This generation processing is executed by the 3D coordinate calculation processing unit 32 of the processing unit 20.

The 3D model data is composed of 3D mesh data (3D shape information) and an orthographically projected image (ortho image). The 3D mesh data is of the 3D coordinates of an object surface obtained through stereo matching processing based on a stereo image, and is expressed according to, e.g., an xyz orthogonal coordinate system. Specifically, a grid defined by x and y coordinates, which are defined with, e.g., a predetermined interval, is set on the xy plane, or a horizontal plane, and a z coordinate for height is given to the grid.

Meanwhile, the orthographically projected image is an image of an object projected onto a horizontal plane. The 3D coordinate calculation processing unit 32 processes a stereo image captured by the camera 12 at each time to thereby generate 3D model data at the time.

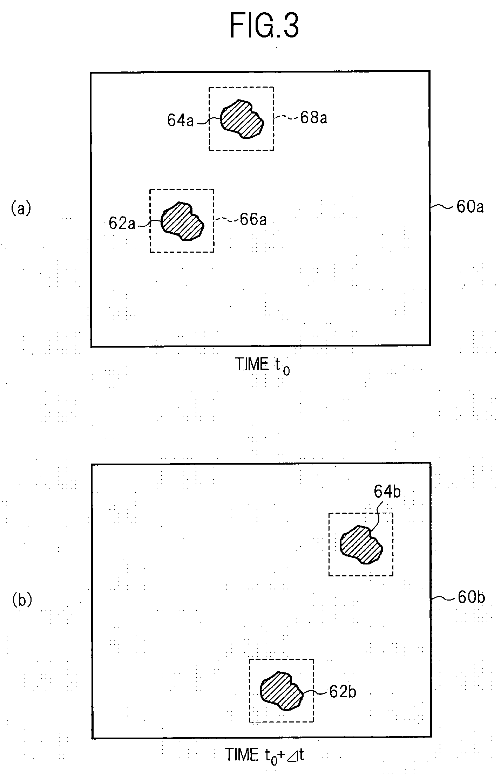

Using the orthographically projected image as a tracking image, the tracking processing unit 30 tracks the 2D image of the target portion in the orthographically projected image (S42) to obtain a 2D displacement vector (S44). FIG. 3 is a schematic diagram explaining the processing at S42 for the tracking in an orthographically projected image. Specifically, FIG. 3A shows the 2D images 62a, 64a of target portions in the orthographically projected image 60a at a preceding time t₀. Thereafter, using as a correlation template the partial images 66a, 68a containing the 2D images 62a, 64a, respectively, pattern matching processing is executed relative to an orthographically projected image 60b at a subsequent time t₀+Δt. As a result, as shown in FIG. 3B, the 2D images 62b, 64b of the target portions in the orthographically projected image 60b at the time t₀+Δt are determined. In the pattern matching processing, for example, a brightness distribution pattern of the correlation template resembles which part of a subsequent orthographically projected image 60b is determined.

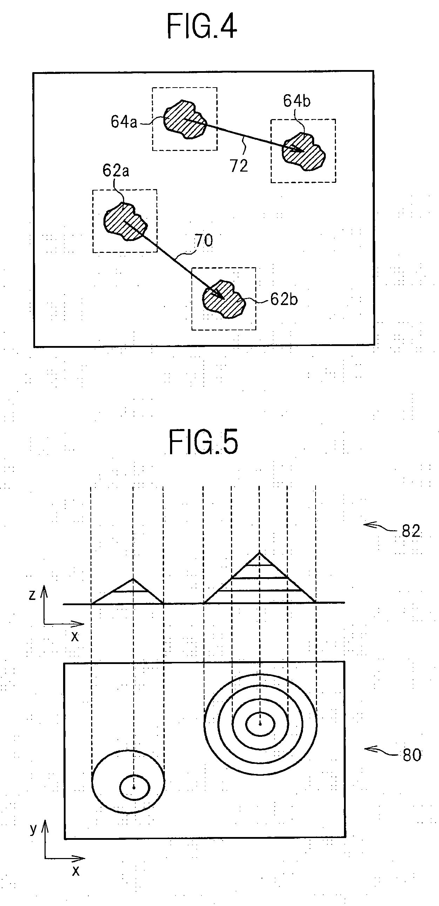

In the pattern matching processing, it is determined that the target portion corresponding to the 2D image 62a corresponds to the 2D image 62b in the orthographically projected image 60b at the subsequent time, and similarly, that the target portion corresponding to the 2D image 64a corresponds to the 2D image 64b. That is, correspondence between 2D images at two respective times t₀ and t₀+Δt is obtained for each target portion. With the above, the coordinates of the 2D image at the time to, that is, the start point of the 2D displacement vector, and those at the time t₀+At, that is, the end point of the same, can be obtained (S44). FIG. 4 is a schematic diagram showing 2D displacement vectors 70, 72 having start points at the respective positions of the 2D images 62a, 64a at the time t₀ and end points at the respective positions of the 2D images 62b, 64b at the time t₀+Δt.

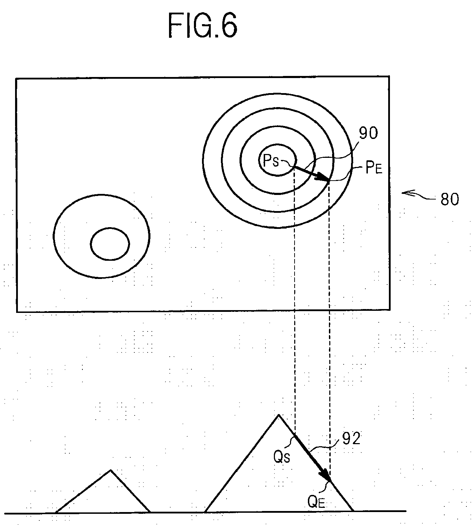

The processing unit 20 converts the 2D displacement obtained on the orthographically projected image into 3D displacement, using the 3D mesh data (S46), to obtain a 3D displacement vector (S48). FIG. 5 is a schematic diagram showing the above mentioned 3D mesh data, including a projection diagram 80 related to projection onto the xy plane, or a horizontal plane, and a projection diagram 82 related to projection onto the zx plane. While the orthographically projected image used to obtain the 2D displacement corresponds to the projection diagram 80 related to projection onto the xy plane, the 2D displacement vector between the two times t₀ and t₀+Δt is projected onto the projection diagram 80. FIG. 6 is a schematic diagram explaining the conversion processing at S46 using the 3D mesh data. FIG. 6 shows a 2D displacement vector 90 of 3D mesh data placed on the projection diagram 80 and the 3D displacement vector 92 obtained based on the 2D displacement vector 90. The 3D coordinate calculation processing unit 32 imparts to the start point P_{S} and the end point P_{E} of the 2D displacement vector on the projection diagram 80, z coordinates at the respective positions, based on the 3D mesh data, to thereby establish correspondence between the points P_{S} and P_{E} and the points Q_{S} and Q_{E}, respectively, in the 3D space. With the above, the coordinates of the start point Q_{S} and the end point Q_{E} of the 3D displacement vector can be obtained (S48).

The displacement vector calculation processing unit 34 obtains a 3D displacement vector, based on the coordinates of the points Q_{S} and Q_{E}.

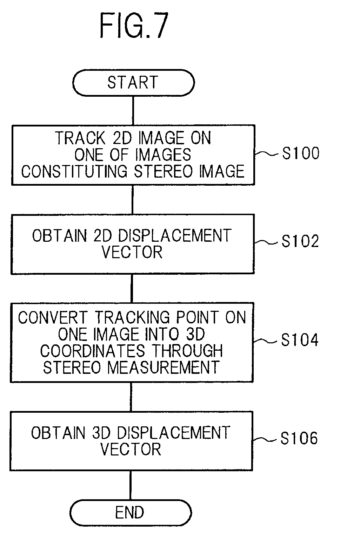

FIG. 7 is a schematic flowchart of the processing executed by the processing unit 20 according to the comparative example. Specifically, using one of the images constituting a stereo image captured by the camera 12 as a tracking image, the tracking processing unit 30 tracks the 2D image of the target portion in the respective images that are obtained time serially at the respective times (S100) to obtain a 2D displacement vector (S102). Specific content of the processing is similar to that of the processing at S42, S44, described in the embodiment, and accordingly, FIGS. 3 and 4 for the embodiment and the description thereof are included here as well. In the processing at S100 and S102 of obtaining the 2D displacement vectors 70, 72, time serial positions of the 2D image (tracking point) of the target portion in one of the images constituting a stereo image, or a tracking image, can be obtained.

The 3D coordinate calculation processing unit 32 extracts a corresponding point of the tracking point in the other one of the images constituting the stereo image at the respective times, and executes stereo measuring processing relative to the tracking point and the corresponding point to obtain the 3D coordinates of the target portion at the respective times (S104).

The displacement vector calculation processing unit 34 obtains a 3D displacement vector having a start point at the 3D coordinates Q_{S} of the target portion at the preceding time of two times for obtaining a 3D displacement vector and an end point at the 3D coordinates Q_{E} at the subsequent time (S106).

The displacement measurement system 10 aims to obtain a 3D displacement vector in an example of landslide. The present invention is also applicable to a wider range of landslide disasters, and the like.

Further, the displacement measurement device 14 is applicable not only to on-line processing of an image captured by the camera 12 on a real time basis, but also to off-line processing of an image captured beforehand and input later.

## Claims

1. A method for displacement measurement for obtaining, based on stereo images of a deformable landform at two or more times, 3D displacement vectors (92) of a plurality of target portions (62a, 62b, 64a, 64b) set on the landform at the respective times the method comprising the steps of:
3D model data generating processing (S40) of generating an orthographically projected image of the landform and 3D mesh data that describes, for a position (x,y) of the landform on the orthographically projected image , a height (z) of the landform, based on the stereo images at the respective times;
tracking processing (42) of tracking 2D images of the target portions (62a, 62b, 64a, 64b) that are set at each respective time on the orthographically projected image by executing pattern matching between the respective times; and
3D coordinate calculation processing (S46) of obtaining 3D coordinates of the target portions (62a, 62b, 64a, 64b), using the 3D mesh data, by adding z-coordinates to the positions (x,y) of the tracked 2D images; and
displacement vector calculation processing (S48) of obtaining the 3D displacement vector s(92) based on the 3D coordinates of the target portions (62a, 62b, 64a, 64b) at the respective times.

2. The method for displacement measurement according to claim 1, wherein the 3D model data generating processing (S40) sets a plurality of grids defined with a
predetermined interval on a horizontal plane corresponding to the orthographically projected image, and generates 3D mesh data in which each of the grids is associated with the height of the landform

3. A device for displacement measurement for obtaining, based on stereo images of a deformable landform at two or more times, 3D displacement vectors (92) of a plurality of target portions (62a, 62b, 64a, 64b) set on the landform at the respective times the device comprising:
means for providing the stereo images;
3D model data generating means (32) for generating 3D model data composed of an orthographically projected image of the landform and 3D mesh data that describes, for a position (x,y) of the landform on the orthographically projected image, a height (z) of the landform, based on the stereo images at the respective times;
tracking means (30) for tracking 2D images of the target portions (62a, 62b, 64a, 64b) that are set at each respective time on the orthographically projected image by executing pattern matching between the respective times;
3D coordinate calculation means (32) for obtaining 3D coordinates of the target portions (62a, 62b, 64a, 64b), using the 3D mesh data, by adding z-coordinates to the positions (x,y) of the tracked 2D images; and
displacement vector calculation means (34) for obtaining the 3D displacement vectors (92), based on the 3D coordinates of the target portions (62a, 62b, 64a, 64b) at the respective times.

4. A program for displacement measurement for causing a computer to function as means for obtaining, based on stereo images of a deformable landform at two or more times, 3D displacement vectors (92) of a plurality of target portions (62a, 62b, 64a, 64b) set on the landform at the respective times, the program causing the computer to perform the functions of:
3D model data generating processing (S40) for generating 3D model data composed of an orthographically projected image of the landform and 3D mesh data that describes, for a position (x,y) of the landform on the orthographically projected image, a height (z) of the landform, based on the stereo images at the respective times;
tracking processing (S42) for tracking 2D images of the target portions (62a, 62b, 64a, 64b) that are set at each respective time on the orthographically projected image by executing pattern matching between the respective times;
3D coordinate calculation processing (S46) for obtaining 3D coordinates of the target portions (62a, 62b, 64a, 64b), using the 3D mesh data, by adding z-coordinates to the positions (x,y) of the tracked 2D images; and
displacement vector calculation processing (S48) for obtaining the 3D displacement vectors (92), based on the 3D coordinates of the target portions (62a, 62b, 64a, 64b) at the respective times.

## Patentansprüche

1. Verfahren zur Verlagerungs - Messung zur Erzielung, auf der Basis von Stereo - Bildern einer deformierbaren Landform zu zwei oder mehr Zeiten, von 3D - Verlagerungs - Vektoren (92) von einer Mehrzahl von Zielabschnitten (62a, 62b, 64a, 64b), die an der Landform zu den jeweiligen Zeiten gesetzt sind, wobei das Verfahren die Schritte aufweist:
eine 3D - Modell - Daten - Erzeugungsverarbeitung (S40) für die Erzeugung eines orthografisch projizierten Bilds der Landform und von 3D - Gitter - Daten, die für eine Position (x, y) der Landform auf dem orthografisch projizierten Bild eine Höhe (z) der Landform auf der Basis der Stereo - Bilder zu den jeweiligen Zeiten beschreiben;
eine Verfolgungs - Verarbeitung (42) zum Verfolgen von 2D - Bildern der Zielabschnitte (62a, 62b, 64a, 64b), die zu jeder jeweiligen Zeit auf dem orthografisch projizierten Bild dadurch festgelegt sind, dass eine Muster - Verarbeitung zwischen den jeweiligen Zeiten ausgeführt wird; und
eine 3D - Koordinaten - Berechnungsverarbeitung (S46) zur Erzielung von 3D - Koordinaten der Zielabschnitte (62a, 62b, 64a, 64b) unter Verwendung der 3D - Gitter - Daten, indem z - Koordinaten zu den Positionen (x, y) der verfolgten 2D - Bilder hinzu addiert werden; und
eine Verlagerungs - Vektor - Berechnungsverarbeitung (S48) zur Erzielung der 3D - Verlagerungsvektoren (92) auf der Basis der 3D - Koordinaten der Zielabschnitte (62a, 62b, 64a, 64b) zu den jeweiligen Zeiten.

2. Verfahren zur Verlagerungs - Messung nach Anspruch 1, bei dem die 3D - Modell - Daten - Generierungsverarbeitung (S40) eine Mehrzahl von Gittern festlegt, die mit einem vorbestimmten Intervall an einer horizontalen Ebene in Entsprechung zu dem orthografisch projizierten Bild definiert sind, und 3D - Gitter - Daten generiert, in denen jedes der Gitter mit der Höhe der Landform verknüpft ist.

3. Vorrichtung zur Verlagerungs - Messung für die Erzielung, auf der Basis von Stereo - Bildern einer deformierbaren Landform zu zwei oder mehr Zeiten, von 3D - Verlagerungs - Vektoren (92) einer Mehrzahl von Zielabschnitten (62a, 62b, 64a, 64b), die auf der Landform zu den jeweiligen Zeiten festgelegt sind, wobei die Vorrichtung aufweist:
eine Einrichtung für die Bereitstellung der Stereo - Bilder,
eine 3D - Modell - Daten - Generierungseinrichtung (32) für die Generierung von 3D - Modell - Daten, die aus einem orthografisch projizierten Bild der Landform und aus 3D - Gitter - Daten zusammengesetzt sind, die für eine Position (x, y) der Landform auf dem orthografisch projizierten Bild eine Höhe (z) der Landform auf der Basis der Stereo - Bilder zu den jeweiligen Zeiten beschreiben;
eine Verfolgungs - Einrichtung (30) für die Verfolgung von 2D - Bildern der Zielabschnitte (62a, 62b, 64a, 64b), die zu jeder jeweiligen Zeit auf dem orthografisch projizierten Bild dadurch festgelegt sind, dass eine Muster - Anpassung zwischen den jeweiligen Zeiten ausgeführt wird;
eine 3D - Koordinaten - Berechnungseinrichtung (32) für die Bildung von 3D - Koordinaten der Zielabschnitte (62a, 62b, 64a, 64b) unter Verwendung der 3D - Gitter - Daten, indem z - Koordinaten zu den Positionen (x, y) der verfolgten 2D - Bilder addiert werden; und
eine Verlagerungs - Vektor - Verarbeitungseinrichtung (34) für die Bildung der 3D - Verlagerungs - Vektoren (92) auf der Basis der 3D - Koordinaten der Zielabschnitte (62a, 62b, 64a, 64b) zu den jeweiligen Zeiten.

4. Programm für eine Verlagerungs - Messung für die Veranlassung eines Computers dazu, als eine Einrichtung für die Erzielung, auf der Basis von Stereo - Bildern einer deformierbaren Landform zu zwei oder mehr Zeiten, von 3D - Verlagerungs - Vektoren (92) einer Mehrzahl von Zielabschnitten (62a, 62b, 64a, 64b), die auf der Landform zu den jeweiligen Zeiten gesetzt sind, zu fungieren, wobei das Programm den Computer dazu veranlasst, die Funktionen auszuführen, und zwar:
3D - Modell - Daten - Generierungs - Verarbeitung (S40) für die Generierung von 3D - Modell - Daten, die aus einem orthografisch projizierten Bild der Landform und 3D - Gitter - Daten zusammengesetzt sind, die für eine Position (x, y) der Landform auf dem orthografisch projizierten Bild eine Höhe (z) der Landform auf der Basis der Stereo - Bilder zu den jeweiligen Zeiten beschreiben;
eine Verfolgungs - Verarbeitung (S42) für die Verfolgung von 2D - Bildern der Zielabschnitte (62a, 62b, 64a, 64b), die zu jeder jeweiligen Zeit auf dem orthografisch projizierten Bild festgelegt sind, und zwar durch Ausführung einer Muster - Anpassung zwischen den jeweiligen Zeiten;
eine 3D - Koordinaten - Berechnungsverarbeitung (S46) für die Bildung von 3D - Koordinaten der Zielabschnitte (62a, 62b, 64a, 64b) unter Verwendung der 3D - Gitter - Daten, indem z - Koordinaten der Positionen (x, y) der verfolgten 2D - Bilder addiert werden; und
eine Verlagerungs - Vektor - Berechnungsverarbeitung (S48) für die Bildung der 3D - Verlagerungs - Vektoren (92) auf der Basis der 3D - Koordinaten der Zielabschnitte (62a, 62b, 64a, 64b) zu den jeweiligen Zeiten.

## Revendications

1. Procédé de mesure de déplacement pour obtenir, sur la base d'images stéréo d'un relief déformable à deux temps ou plus, des vecteurs de déplacement 3D (92) d'une pluralité de portions cibles (62a, 62b, 64a, 64b) réglées sur le relief aux temps respectifs, le procédé comprenant les étapes de :
un traitement de génération de données de modèle 3D (S40) consistant à générer une image projetée de manière orthographique du relief et de données de maillage 3D décrivant, pour une position (x, y) du relief sur l'image projetée de manière orthographique, une hauteur (z) du relief, sur la base des images stéréo aux temps respectifs ;
un traitement de suivi (S42) consistant à effectuer le suivi d'images 2D des portions cibles (62a, 62b, 64a, 64b) qui sont réglées à chaque temps respectif sur l'image projetée de manière orthographique par l'exécution d'une mise en correspondance de motifs entre les temps respectifs ;
un traitement de calcul de coordonnées 3D (S46) consistant à obtenir des coordonnées 3D des portions cibles (62a, 62b, 64a, 64b), en utilisant les données de maillage 3D, par l'ajout des coordonnées z aux positions (x, y) des images 2D suivies ; et
un traitement de calcul de vecteur de déplacement (S48) consistant à obtenir les vecteurs de déplacement 3D (92) sur la base des coordonnées 3D des portions cibles (62a, 62b, 64a, 64b) aux temps respectifs.

2. Procédé de mesure de déplacement selon la revendication 1, dans lequel le traitement de génération de données de modèle 3D (S40) règle une pluralité de grilles définies à un intervalle prédéterminé sur un plan horizontal correspondant à l'image projetée de manière orthographique, et génère des données de maillage 3D dans lesquelles chacune des grilles est associée à la hauteur du relief.

3. Dispositif de mesure de déplacement pour obtenir, sur la base d'images stéréo d'un relief déformable à deux temps ou plus, des vecteurs de déplacement 3D (92) d'une pluralité de portions cibles (62a, 62b, 64a, 64b) réglées sur le relief aux temps respectifs, le dispositif comprenant :
des moyens pour fournir les images stéréo ;
des moyens de génération de données de modèle 3D (32) pour générer des données de modèle 3D se composant d'une image projetée de manière orthographique du relief et de données de maillage 3D décrivant, pour une position (x, y) du relief sur l'image projetée de manière orthographique, une hauteur (z) du relief, sur la base des images stéréo aux temps respectifs ;
des moyens de suivi (30) pour effectuer le suivi d'images 2D des portions cibles (62a, 62b, 64a, 64b) qui sont réglées à chaque temps respectif sur l'image projetée de manière orthographique par l'exécution d'une mise en correspondance de motifs entre les temps respectifs ;
des moyens de calcul de coordonnées 3D (32) pour obtenir des coordonnées 3D des portions cibles (62a, 62b, 64a, 64b), en utilisant les données de maillage 3D, par l'ajout des coordonnées z aux positions (x, y) des images 2D suivies ; et
des moyens de calcul de vecteur de déplacement (34) pour obtenir les vecteurs de déplacement 3D (92) sur la base des coordonnées 3D des portions cibles (62a, 62b, 64a, 64b) aux temps respectifs.

4. Programme de mesure de déplacement pour amener un ordinateur à fonctionner en tant que moyen pour obtenir, sur la base d'images stéréo d'un relief déformable à deux temps ou plus, des vecteurs de déplacement 3D (92) d'une pluralité de portions cibles (62a, 62b, 64a, 64b) réglées sur le relief aux temps respectifs, le programme amenant l'ordinateur à effectuer les fonctions de :
un traitement de génération de données de modèle 3D (S40) consistant à générer des données de modèle 3D se composant d'une image projetée de manière orthographique du relief et de données de maillage 3D décrivant, pour une position (x, y) du relief sur l'image projetée de manière orthographique, une hauteur (z) du relief, sur la base des images stéréo aux temps respectifs ;
un traitement de suivi (S42) consistant à effectuer le suivi d'images 2D des portions cibles (62a, 62b, 64a, 64b) qui sont réglées à chaque temps respectif sur l'image projetée de manière orthographique par l'exécution d'une mise en correspondance de motifs entre les temps respectifs ;
un traitement de calcul de coordonnées 3D (S46) consistant à obtenir des coordonnées 3D des portions cibles (62a, 62b, 64a, 64b), en utilisant les données de maillage 3D, par l'ajout des coordonnées z aux positions (x, y) des images 2D suivies ; et
un traitement de calcul de vecteur de déplacement (S48) consistant à obtenir les vecteurs de déplacement 3D (92) sur la base des coordonnées 3D des portions cibles (62a, 62b, 64a, 64b) aux temps respectifs.
